# FASCICULE DE BREVET EUROPEEN

(11) **EP 4 149 785 B1**
(45) Date de publication et mention de la délivrance du brevet: **09.04.2025**
(21) Numéro de dépôt: 21720788.5
(22) Date de dépôt: 28.04.2021
(51) Int. Cl.: B60K 35/00, B60K 35/10, B60K 35/21, B60K 35/22, B60K 35/28

(54) **DISPOSITIF D'AFFICHAGE**
ANZEIGEGERÄT
DISPLAY DEVICE

(30) Priorité: 13.05.2020 FR 2004693
(43) Date de publication de la demande: 22.03.2023
(73) Titulaire: Valeo Comfort and Driving Assistance, 94000 Créteil (FR)
(72) Inventeur: MERMILLOD, Pierre, 94046 Créteil CEDEX (FR); AVISSE, Thomas, 94046 Créteil CEDEX (FR); TREMBLIN, Pierre-Alain, 94046 Créteil CEDEX (FR)
(74) Mandataire: Delplanque, Arnaud
(86) Numéro de dépôt international: PCT/EP2021/061191
(87) Numéro de publication internationale: WO 2021/228557

(56) Documents cités:
- FR-A1- 3 057 965
- FR-A1- 3 079 179
- US-B2- 8 816 995

## Description

### DOMAINE TECHNIQUE AUQUEL SE RAPPORTE L'INVENTION

La présente invention concerne de manière générale le domaine des dispositifs d'affichage.

Elle concerne plus particulièrement les dispositifs d'affichage pour véhicule.

### ARRIERE-PLAN TECHNOLOGIQUE

Certains véhicules automobiles sont actuellement équipés de systèmes d'affichage, par exemple de type voyants ou indicateurs, comprenant une source de lumière éclairant un dispositif de diffraction formant une image sur une surface transparente ou partiellement transparente. Ces systèmes d'affichage peuvent notamment équiper des boutons de commande par exemple pour contrôler la température de l'habitacle.

Ces systèmes d'affichage permettent de se passer d'un masque laissant apparaître le caractère ou le symbole même lorsque le voyant est éteint. Grâce à ces systèmes d'affichage, le caractère ou symbole apparaît comme « flottant », c'est-à-dire sans support, sur la surface transparente, ce qui lui confère un aspect très esthétique.

Ces systèmes d'affichages sont néanmoins sensibles à la lumière extérieure, en particulier à un rayonnement solaire pénétrant dans le dispositif d'affichage. En effet, un tel rayonnement solaire peut d'une part causer des interférences, reflets ou lumières parasites perturbant l'affichage du caractère ou du symbole et d'autre part provoquer l'échauffement de la source de lumière, ce qui peut engendrer des dégâts irréversibles.

FR3079179A1 divulgue une interface pour un habitacle d'un véhicule automobile.

### PRESENTATION DE L'INVENTION

Dans ce contexte, la présente invention propose un dispositif d'affichage comprenant :
- une source de lumière conçue pour générer un faisceau lumineux source s'étendant sur une plage de longueurs d'onde prédéterminée ;
- un élément optique diffractif dont la plage de fonctionnement est adaptée à ladite plage de longueurs d'onde et agencé pour recevoir ledit faisceau lumineux source et transmettre un faisceau lumineux image ; et
- un filtre dichroïque placé sur le trajet dudit faisceau lumineux image et dont la bande passante recouvre au moins en partie ladite plage de longueurs d'onde de manière à transmettre au moins en partie ledit faisceau lumineux image.

Ainsi, grâce au filtre dichroïque, seule une très faible portion d'un rayonnement extérieur peut pénétrer dans le dispositif d'affichage. Seule la portion d'un rayonnement extérieur correspondant à la bande passante du filtre dichroïque peut pénétrer dans le dispositif d'affichage. Cela diminue les risques d'échauffement de la source de lumière et atténue les lumières parasites.

Avantageusement, le dispositif d'affichage comprend :
- un séparateur adapté à séparer spatialement ledit faisceau source en au moins deux faisceaux lumineux divisés ;
- un autre élément optique diffractif, les plages de fonctionnement de chacun des éléments optiques diffractifs étant adaptées à ladite plage de longueurs d'onde et chacun des éléments optiques diffractifs étant agencés pour recevoir un desdits faisceaux lumineux divisés et transmettre un faisceau lumineux image ; et
- un autre filtre dichroïque, chacun des deux filtres dichroïques étant placé sur le trajet d'un desdits faisceaux images, les bandes passantes chacun des deux filtres dichroïques recouvrant une partie seulement de ladite plage de longueurs d'onde de manière à filtrer, en longueurs d'onde, lesdits faisceaux images.

Ceci permet de créer des symboles de couleurs différentes à partir d'une même source de lumière, le filtre dichroïque permettant de sélectionner une couleur prédéterminée. Utiliser une unique source de lumière représente par exemple un gain de place significatif.

D'autres caractéristiques non limitatives et avantageuses du dispositif conforme à l'invention, prises individuellement ou selon toutes les combinaisons techniquement possibles, sont les suivantes :
- ledit dispositif d'affichage comprend en outre un diffuseur disposé sur le trajet dudit faisceau lumineux image ;
- ledit élément optique diffractif est mobile par rapport à ladite source de lumière ;
- ledit élément optique diffractif est conçu pour que ledit faisceau lumineux image dépende de la position relative dudit élément optique diffractif par rapport à ladite source de lumière ;
- ledit dispositif d'affichage comprend en outre un système optique configuré pour moduler spatialement ledit faisceau lumineux source ;
- ledit dispositif d'affichage comprend en outre un guide de lumière ;
- ladite source de lumière comprend au moins une diode électroluminescente ;
- ladite source de lumière comprend une source laser ;
- ledit filtre dichroïque est un filtre du type passe-bande, passe-haut ou passe-bas ;
- ledit filtre dichroïque est un filtre du type passe-bande et dans lequel ladite bande passante dudit filtre dichroïque est centrée sur ladite plage de longueurs d'onde ;
- l'absorbance dudit filtre dichroïque est non nulle ;
- ledit filtre dichroïque et ledit diffuseur sont collés par un adhésif optique.

L'invention concerne également un bouton de commande comprenant un tel dispositif d'affichage.

### DESCRIPTION DES MODES DE REALISATION

La description qui va suivre en regard des dessins annexés, donnés à titre d'exemples non limitatifs, fera bien comprendre en quoi consiste l'invention et comment elle peut être réalisée.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Sur les dessins annexés :
[Fig. 1] est une représentation schématique d'un dispositif d'affichage selon un premier mode de réalisation de l'invention ;
[Fig. 2] est un graphique représentant les propriétés d'un filtre dichroïque du dispositif d'affichage de la figure 1 ;
[Fig. 3] est une représentation schématique d'un dispositif d'affichage selon un deuxième mode de réalisation de l'invention ;
[Fig. 4] est une représentation schématique d'une partie du dispositif d'affichage de la figure 1 affichant un premier symbole ;
[Fig. 5] est une représentation schématique de la partie du dispositif d'affichage de la figure 1 affichant un second symbole.

Dans ce document, un dispositif d'affichage 1 est décrit dans le cas où il est utilisé pour afficher des symboles ou des caractères, par exemple des chiffres, au sein d'un véhicule automobile, par exemple pour qu'un utilisateur puisse visualiser des informations relatives au fonctionnement du véhicule telles que des valeurs discrètes de température de consigne ou l'état des feux. Le dispositif d'affichage 1 peut par exemple être intégré dans une planche de bord du véhicule. Le dispositif d'affichage 1 peut par exemple équiper la surface d'un bouton de commande. Le dispositif d'affichage 1 peut toutefois s'appliquer également à toute autre utilisation envisageable d'un symbole ou caractère lumineux pouvant être éteint ou allumé.

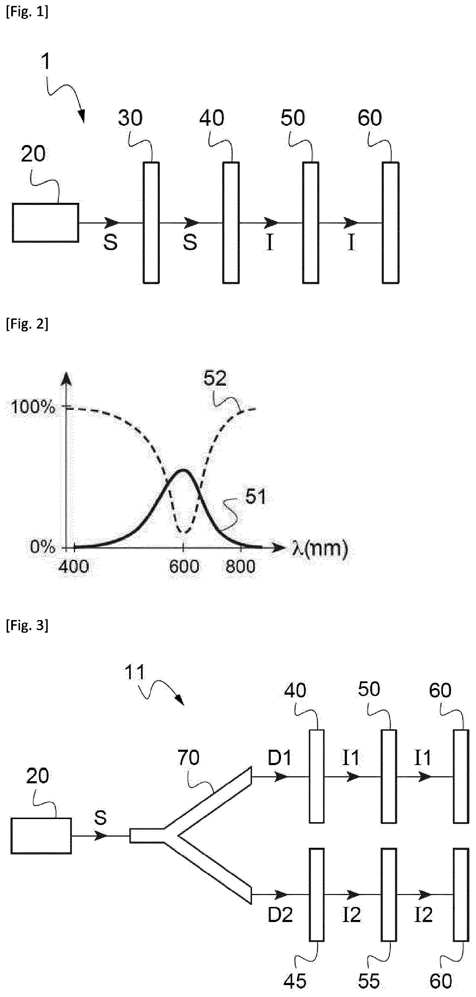

Les figures 1 et 3 représentent deux modes de réalisation du dispositif d'affichage 1.

Dans ces deux modes de réalisation, le dispositif d'affichage 1 comprend :
- une source de lumière 20 ;
- un élément optique diffractif 40 ; et
- un filtre dichroïque 50.

Dans un premier temps, on décrit en détail le premier mode de réalisation représenté en figure 1.

Dans ce premier mode de réalisation, comme le montre la figure 1, le dispositif d'affichage 1 comprend aussi :
- un système optique 30 ;
- un diffuseur 60.

La source de lumière 20 est conçue pour générer un faisceau lumineux source S s'étendant sur une plage de longueurs d'onde prédéterminée. La plage de longueur d'onde est un intervalle de longueurs d'onde que la source de lumière 20 est capable de produire. Une largeur de la plage de longueur d'onde est par exemple définie par l'écart entre la longueur d'onde la plus courte et la longueur d'onde la plus longue que la source de lumière 20 peut émettre.

Ici, par « s'étendant sur une plage de longueurs d'onde » on entend que le faisceau lumineux source S comprend l'ensemble des longueurs d'onde, à des intensités qui peuvent être variables, de la plage de longueurs d'onde.

Le faisceau lumineux source S étant destiné à produire un caractère ou un symbole visible par un utilisateur, la plage de longueur d'onde comprend donc de préférence des longueurs d'onde comprises dans le domaine visible.

La source de lumière 20 peut par exemple comprendre une diode électroluminescente, appelée LED, bleue équipée d'une couche de phosphore. Le spectre d'émission d'une telle source de lumière 20 est relativement continu dans l'ensemble du domaine visible. La plage de longueur d'onde peut alors comprendre l'ensemble du domaine visible, typiquement de 400 nm à 700 nm.

La source de lumière 20 peut par exemple comprendre un laser possédant une longueur d'onde centrale comprise dans le domaine visible. La plage de longueur d'onde peut alors être définie par la bande spectrale étroite autour de la longueur d'onde centrale.

La source de lumière 20 peut aussi être un écran à cristaux liquides rétroéclairé, couramment appelé écran LCD.

Ici, le faisceau lumineux source S est émis en direction du système optique 30.

Le système optique 30 est configuré pour moduler spatialement le faisceau lumineux source S, c'est-à-dire modifier son orientation et/ou ses dimensions sans changer son contenu fréquentiel.

Ici, le système optique 30 permet d'orienter le faisceau lumineux source S, par exemple à l'aide d'un ou plusieurs miroirs. Le dispositif d'affichage 1 peut aussi comprendre un guide de lumière. Ce guide de lumière est compris dans le système optique 30 pour permettre d'orienter le faisceau lumineux source S.

Ici, le système optique 30 permet aussi de modifier les dimensions du faisceau lumineux source S, par exemple élargir ou rétrécir le faisceau lumineux source S. Le faisceau lumineux source S peut par exemple être collimaté grâce à une lentille pour atteindre une largeur voulue.

Le système optique 30 est ici configuré pour que le faisceau lumineux source S atteigne une zone prédéterminée de l'élément optique diffractif 40 selon un angle d'incidence prédéterminée.

L'élément optique diffractif 40, dont la plage de fonctionnement est adaptée à la plage de longueurs d'onde, est agencé pour recevoir le faisceau lumineux source S et transmettre un faisceau lumineux image I.

L'élément optique diffractif 40 peut être obtenu par exemple par pressage ou par injection.

L'élément optique diffractif 40 est ici un masque de phase ou d'amplitude (plus connu sous de nom de DOE de l'anglais « diffractive optical element ») conçu pour modifier le front d'onde du faisceau lumineux source S de manière à obtenir une répartition d'éclairement déterminée du faisceau lumineux image I. Cette répartition d'éclairement définit le symbole ou le caractère associé au faisceau lumineux image I.

Le fonctionnement de l'élément optique diffractif 40 dépend des longueurs d'onde d'utilisation. Le rendement de l'élément optique diffractif 40 est optimal pour une longueur d'onde donnée ou pour une bande étroite de longueurs d'onde. La plage de fonctionnement de l'élément optique diffractif 40 peut être définie comme les longueurs d'onde pour lesquelles le rendement est supérieur ou égal à une fraction du rendement optimal, par exemple à 80% du rendement optimal. La dépendance de l'élément optique diffractif 40 aux longueurs d'onde d'utilisation peut être assez élevée. Ainsi, si l'élément optique diffractif 40 est éclairé par des longueurs d'onde situées hors de sa plage de fonctionnement, le faisceau lumineux image I transmis est incohérent et ne produit pas, ou de manière déformée ou non optimale, le symbole ou le caractère souhaité. De plus, hors de la plage de fonctionnement, les dimensions du faisceau lumineux image I transmis sont inférieures à celles du faisceau lumineux image I transmis au rendement optimal.

Ici, la plage de fonctionnement de l'élément optique diffractif 40 recouvre au moins une partie de la plage de longueurs d'onde du faisceau lumineux source S. De préférence, la plage de fonctionnement de l'élément optique diffractif 40 est plus large que, et comprend, la plage de longueurs d'onde du faisceau lumineuse source S.

Le faisceau lumineux image I dépend aussi de l'angle d'incidence du faisceau lumineux source S sur l'élément optique diffractif 40. Cet angle d'incidence est réglé lors de la calibration du dispositif d'affichage grâce au système optique 30 de manière à obtenir le symbole ou le caractère souhaité.

De plus, ici, l'élément optique diffractif 40 est conçu pour que le faisceau lumineux image I dépende de la position relative de l'élément optique diffractif 40 par rapport à la source de lumière 20. Cela signifie que le faisceau lumineux image I dépend de la zone de l'élément optique diffractif 40 éclairée par le faisceau lumineux source S. La surface de l'élément optique diffractif 40 n'est donc pas uniforme mais présente des variations spatiales ou une périodicité spatiale.

L'élément optique diffractif 40 peut ainsi comprendre plusieurs zones associées à des symboles ou caractères distincts. Lorsqu'une zone particulière est éclairée par le faisceau lumineux source S, cela permet de produire un caractère ou symbole particulier choisi.

Pour sélectionner la zone de l'élément optique diffractif 40 éclairée par le faisceau lumineux source S, il est ici prévu que l'élément optique diffractif 40 soit mobile par rapport à la source de lumière 20. Ici, l'élément optique diffractif 40 est donc aussi mobile par rapport au faisceau lumineux source S. Cela présente l'avantage de pouvoir modifier le faisceau lumineux image I, et donc le caractère ou le symbole choisi, tout en conservant la position et l'orientation du faisceau lumineux image I. Cela permet par exemple d'afficher le caractère ou le symbole toujours au même endroit du tableau de bord ou du bouton de commande.

L'élément optique diffractif 40 peut par exemple avoir globalement la forme d'un disque sur lequel les différentes zones sont réparties de façon circonférentielle. Avec un faisceau lumineux source S qui éclaire la périphérie du disque, il est possible de sélectionner la zone de l'élément optique diffractif 40 par rotation de ce dernier. Des valeurs incrémentielles de température peuvent par exemple être associées zones successives à la périphérie du disque. Un tel dispositif d'affichage 1 convient particulièrement à un bouton rotatif pour tableau de bord.

En variante, on pourrait prévoir d'utiliser plusieurs éléments optiques diffractifs distincts disposés en périphérie d'un disque support. Chaque élément optique diffractif distinct permettrait de produire un symbole ou caractère particulier et sa taille serait inférieure à celle d'un élément optique diffractif unique.

En variante, on pourrait aussi prévoir que la zone éclairée par le faisceau lumineux source soit sélectionnée en orientant le faisceau lumineux source grâce au système optique, par exemple à l'aide de miroirs mobiles.

Comme le montre la figure 1, le filtre dichroïque 50 est placé sur le trajet du faisceau lumineux image I. Le trajet du faisceau lumineux image I est défini par la direction et le sens de propagation du faisceau lumineux image I depuis l'élément optique diffractif 40.

Le filtre dichroïque 50 possède une bande passante qui recouvre en partie la plage de longueurs d'onde de manière à transmettre au moins en partie le faisceau lumineux image I.

De façon générale, les propriétés des filtres dichroïques, encore appelés filtres interférentiels, dépendent fortement de la longueur d'onde du faisceau lumineux incident. Ainsi, un filtre dichroïque peut être purement transmissif à une certaine longueur d'onde et purement réflectif à une autre.

Le filtre dichroïque 50 peut être un filtre du type passe-bande, seules les longueurs d'onde d'un intervalle donné sont transmises, passe-haut, toutes les longueurs d'onde au dessus d'un seuil donné sont transmises ou passe-bas, toutes les longueurs d'onde en dessus d'un seuil donné sont transmises. Ici, une longueur d'onde transmise ne signifie pas que l'efficacité est nécessairement de 100 %, mais qu'au moins une partie d'un faisceau à cette longueur d'onde est transmise. Les longueurs d'onde transmises par le filtre dichroïque 50 définissent la bande passante.

La bande passante peut par exemple être définie comme la bande passante à -3dB par rapport au maximum de transmission, comme la largeur à mi-hauteur du pic de transmission ou encore comme l'ensemble des longueurs d'onde pour lesquelles l'efficacité de transmission est supérieure ou égale à une valeur seuil, par exemple 10%.

Un exemple d'une courbe de transmission 51 et d'une courbe de réflexion 52 d'un filtre dichroïque 50 passe-bande est donné en figure 2. La courbe de transmission présente un maximum d'efficacité à 600 nm. Cela signifie que ce filtre dichroïque 50 laisse principalement passer la lumière orange. A l'inverse la courbe de réflexion présente un minimum à 600 nm. Cela signifie que ce filtre dichroïque 50 ne réfléchit que très faiblement la lumière orange.

Dans cet exemple le filtre dichroïque 50 possède une bande passante s'étendant approximativement de 500 nm à 800 nm. Ici, la bande passante est définie par les longueurs d'onde pour lesquelles l'efficacité en transmission est supérieure à environ 5%. La largeur de la bande passante peut être augmentée afin d'augmenter le flux total du faisceau lumineux image I transmis par le filtre dichroïque 50, et inversement.

Dans cet exemple, la somme des efficacités en transmission et en réflexion n'est pas égale à 100%. Cela correspond à un cas où l'absorbance du filtre dichroïque 50 est non nulle. Le filtre dichroïque 50 absorbe alors une partie de la lumière qui le traverse, ce qui permet de cacher l'intérieur du dispositif d'affichage 1, par exemple la source de lumière 20, pour l'utilisateur. En d'autres termes, le filtre dichroïque 50 a alors un effet opacifiant.

Comme nous l'avons vu, la bande passante du filtre dichroïque 50 recouvre au moins en partie la plage de longueurs d'onde du faisceau lumineux source S. La bande passante du filtre dichroïque 50 recouvre donc aussi les longueurs d'onde composant le faisceau lumineux image I. Cela permet de transmettre au moins en partie le faisceau lumineux image I. Le faisceau lumineux image I peut aussi être en partie réfléchi ou absorbé.

Par « recouvre » on entend que la plage de longueurs et la bande passante du filtre dichroïque 50 possèdent des longueurs d'ondes communes. Cela signifie par exemple que les longueurs d'onde de la plage de longueurs d'onde sont comprises dans la bande passante du filtre dichroïque 50. Ces deux intervalles de longueurs d'onde, la bande passante et la plage de longueur d'onde, peuvent ne se recouvrir qu'en partie et être par exemple légèrement décalés. Ou encore, la bande passante du filtre dichroïque 50 peut être plus étroite que la plage de longueurs d'onde ou inversement. La bande passante du filtre dichroïque 50 est de préférence plus large que la plage de fonctionnement de l'élément optique diffractif 40. Cela permet par exemple de faciliter la conception des éléments optiques ou encore de tolérer des variations de longueurs d'onde qui peuvent être générées par des changements de température de la source de lumière 20.

Lorsque le filtre dichroïque 50 est un filtre passe bande, on peut prévoir que la bande passante du filtre dichroïque 50 soit centrée sur la plage de longueurs d'onde, c'est-à-dire que le maximum de transmission du filtre dichroïque 50 corresponde à la longueur d'onde centrale de la plage de longueurs d'onde. Ainsi, pour une bande passante donnée d'un filtre dichroïque, la transmission du faisceau lumineux image I est maximum. Cela permet une visibilité maximum du symbole ou caractère.

La bande passante du filtre dichroïque 50 correspond donc sensiblement à la plage de longueurs d'onde dans le but de perturber le moins possible le faisceau lumineux image I le long de son trajet.

Avantageusement, le filtre dichroïque 50 permet de bloquer en partie, c'est-à-dire ici de réfléchir et dans une moindre mesure d'absorber, un rayonnement extérieur pénétrant dans le dispositif d'affichage 1. Par exemple, le filtre dichroïque 50 permet de bloquer en partie un faisceau lumineux solaire se propageant en sens inverse du trajet du faisceau lumineux image I.

Un rayonnement extérieur se propageant vers l'élément optique diffractif 40 et vers la source de lumière 20 peut provoquer d'une part des interférences lumineuses ou lumières parasites perturbant l'affichage du caractère ou du symbole et d'autre part provoquer l'échauffement de la source de lumière 20, ce qui peut engendrer des dégâts irréversibles. Le filtre dichroïque 50 permet de filtrer ce rayonnement extérieur. Par exemple, avec le filtre dichroïque 50 présenté en figure 2 et dans le cas d'un rayonnement solaire, la portion infrarouge du rayonnement est réfléchie par le filtre dichroïque 50 et ne peut donc pas atteindre la source de lumière 10 et provoquer son échauffement.

En effet, seule la portion d'un rayonnement extérieur correspondant à la bande passante du filtre dichroïque 50 peut pénétrer dans le dispositif d'affichage 1. Le filtre dichroïque 50 représente donc un moyen de protection pour le dispositif d'affichage 1.

Le filtre dichroïque 50 peut aussi permettre, comme décrit précédemment, de cacher l'intérieur du dispositif d'affichage 1, ce que rend le dispositif d'affichage 1 plus esthétique pour l'utilisateur.

On peut prévoir par exemple en pratique que le dispositif d'affichage 1 soit configuré de telle sorte que le filtre dichroïque 50 occupe la seule ouverture du dispositif d'affichage 1 vers l'extérieur, par exemple vers l'habitacle du véhicule. Ainsi, un rayonnement extérieur devrait dans ce cas nécessairement passer par le filtre dichroïque pour pénétrer dans le dispositif d'affichage 1.

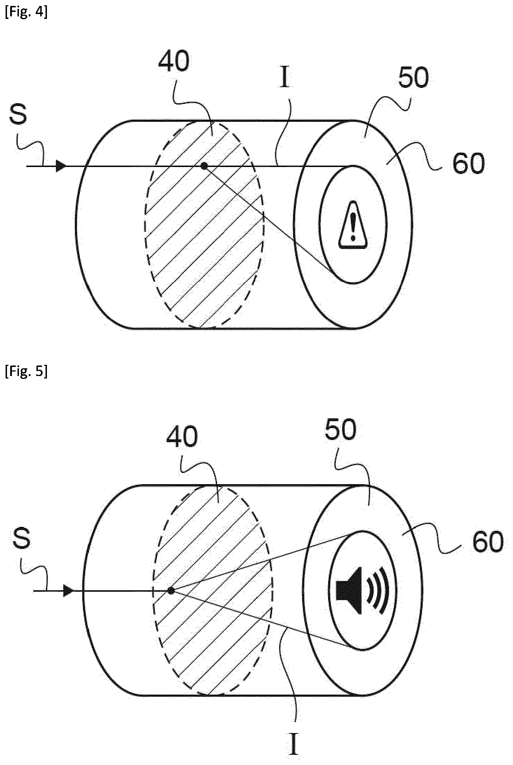

Comme illustré aux figures 4 et 5, une telle configuration peut par exemple être réalisée en agençant le dispositif d'affichage 1 dans un cylindre creux comprenant une ouverture sur une de ses faces circulaire. On peut prévoir dans ce cas que le filtre dichroïque 50 circulaire soit placé au niveau de cette ouverture, en fermant par exemple cette ouverture.

Pour augmenter la protection, on peut par exemple utiliser un filtre dichroïque 50 passe bande avec une bande passante étroite, par exemple inférieur à 100 nm, ainsi la majorité d'un rayonnement extérieur est réfléchi vers l'extérieur. Une bande passante étroite peut cependant réduire l'intensité du faisceau lumineux image I. Pour que le faisceau lumineux image I conserve une intensité suffisante, on peut alors prévoir d'utiliser, en combinaison avec le filtre dichroïque 50 passe bande, une source de lumière 20 comprenant un laser dont la bande d'émission correspond à la bande passante. Par exemple un laser émettant autour de 600 nm en combinaison avec le filtre dichroïque présenté en figure 2.

Comme le montre la figure 1, le dispositif d'affichage 1 comprend ici un diffuseur 60.

Ici, le diffuseur 60 est situé après le filtre dichroïque 50 sur le trajet du faisceau lumineux image I. En variante, on pourrait prévoir que le diffuseur soit placé avant le filtre dichroïque sur le trajet du faisceau lumineux image.

Le rôle du diffuseur 60 est de rendre le symbole ou le caractère associé au faisceau lumineux image I visible par un utilisateur. En effet, le faisceau lumineux image I n'est pas spécifiquement orienté vers l'œil de l'utilisateur. Il convient donc de « projeter » le symbole ou le caractère associé au faisceau lumineux image I sur le diffuseur pour rendre le symbole ou le caractère visible.

Le diffuseur 60 peut posséder une direction de diffusion privilégiée qui est alors orientée vers une zone ou se trouve la tête de l'utilisateur. Le diffuseur 60 peut aussi diffuser de façon uniforme pour être visible quelque soit la position de l'utilisateur.

Le diffuseur 60 peut être réalisé en plastique, par exemple en polycarbonate.

Le diffuseur 60 peut être collé ou au contact optique avec le filtre dichroïque 50. Le diffuseur 60 et le filtre dichroïque 50 sont par exemple collés par un adhésif optique.

Sur les figures 4 et 5, le dispositif d'affichage 1 est agencé dans un cylindre creux. L'élément optique diffractif 40 est ici un disque sur lequel différentes zones (non représentées) sont réparties sur la périphérie du disque. Comme le montre les figures 4 et 5, choisir la position du faisceau lumineux source S sur l'élément optique diffractif 40, c'est-à-dire choisir la zone illuminée, permet de sélectionner un caractère ou symbole spécifique.

Lors du passage la configuration de la figure 4 à celle de la figure 5, le changement de zone de l'élément optique diffractif 40 illuminée par le faisceau lumineux source S peut se faire en tournant l'élément optique diffractif 40 autour de son axe, qui est ici confondu avec l'axe du cylindre creux. Ici, cette rotation de l'élément optique diffractif 40 est représentée de façon schématique par un déplacement du faisceau lumineux source S.

Sur les figures 4 et 5, le diffuseur 60 et filtre dichroïque 50 sont collés par un adhésif optique. Le diffuseur 60 et filtre dichroïque 50 sont disposés au niveau d'une face circulaire du cylindre creux. Le symbole ou le caractère est alors affichée sur cette face circulaire.

Dans un deuxième mode de réalisation représenté en figure 3, le dispositif d'affichage 1 comprend :
- un séparateur 70 ;
- l'élément optique diffractif 40 appelé premier élément optique diffractif 40 ;
- un second élément optique diffractif 45 ;
- le filtre dichroïque 50 appelé premier filtre dichroïque 50 ; et
- un second filtre dichroïque 55.

Ici, le dispositif d'affichage 1 comprend aussi le diffuseur 60, appelé premier diffuseur 60 et un second diffuseur 65.

Le séparateur 70 est adapté à séparer spatialement le faisceau source en au moins deux faisceaux lumineux divisés D1, D2, ici en un premier faisceau lumineux divisé D1 et un second faisceau lumineux divisé D2. Pour cela, le séparateur 70 peut par exemple comprendre un miroir semi-transparent, ainsi le faisceau lumineux source S est divisé en deux faisceau lumineux divisés D1, D2 ayant chacun une intensité deux fois inférieure à celle du faisceau lumineux source S.

Ici, le séparateur 70 assure aussi les fonctions de modulation spatiale du faisceau lumineux source S exercées par le système optique 30 dans le premier mode de réalisation. Le séparateur 70 peut moduler indépendamment chaque faisceau lumineux divisé D1, D2.

Chaque faisceau lumineux divisé D1, D2 éclaire alors un des deux éléments optiques diffractifs 40, 45. Chaque élément optique diffractif 40, 45 est agencé pour recevoir un des deux faisceaux lumineux divisés D1, D2 et pour chacun transmettre un faisceau lumineux image I1, I2. Ici, le premier élément optique diffractif 40 reçoit le premier faisceau lumineux divisé D1 et transmet un premier faisceau lumineux image I1 et le second élément optique diffractif 45 reçoit le second faisceau lumineux divisé D2 et transmet un second faisceau lumineux image I2.

Les plages de fonctionnement de chacun des éléments optiques diffractifs 40, 45 sont adaptées à la plage de longueurs d'onde du faisceau lumineux source S. La plage de fonctionnement de chaque élément optique diffractif 40, 45 est donc adaptée aux longueurs d'onde comprises dans les faisceaux lumineux divisés D1, D2.

Le second élément optique diffractif 45 peut posséder des propriétés semblables à celles du premier élément optique diffractifs 40 décrit précédemment. Cependant les deux éléments optiques diffractifs 40, 45 peuvent différer dans leur conception de manière à ce que les faisceaux lumineux images I1 et I2 soient associés à des symboles ou des caractères distincts.

Chacun des deux filtres dichroïques 50, 55 est disposé sur le trajet d'un des deux faisceaux lumineux images I1 et I2. Ici, comme le montre la figure 3, le premier filtre dichroïque 50 est disposé sur le trajet du premier faisceau lumineux image I1 et le second filtre dichroïque 55 est disposé sur le trajet du second faisceau lumineux image I2.

La bande passante de chaque filtre dichroïque 50, 55 recouvre en moins en partie la plage de longueur d'onde du faisceau lumineux source S. Ceci permet la protection du système d'affichage tel que décrit dans le premier mode de réalisation.

Après filtrage, chaque faisceau lumineux image I1, I2 est ensuite « projeté » sur un diffuseur 60, 65 pour le rendre visible par un utilisateur. Ici, comme le montre la figure 3, le premier diffuseur 60 est disposé sur le trajet du premier faisceau lumineux image I1 et le second diffuseur 65 est disposé sur le trajet du second faisceau lumineux image I2. Leurs propriétés sont similaires à celles décrites dans le premier mode de réalisation. Comme décrit précédemment, les diffuseurs 60, 65 peuvent être combinés avec les filtres dichroïques 50, 55.

Dans ce deuxième mode de réalisation, la bande passante de chaque filtre dichroïque 50, 55 recouvre plus spécifiquement une partie seulement de la plage de longueurs d'onde de manière à filtrer, en longueurs d'onde, les faisceaux lumineux images I1, I2. La bande passante de chaque filtre dichroïque 50, 55 est prédéterminée en fonction de la couleur souhaitée pour le symbole ou le caractère associé à chaque faisceau lumineux image I1, I2.

De préférence, les bandes passantes des deux filtres dichroïques 50, 55 sont distinctes et comprises dans la plage de longueurs d'onde du faisceau lumineux source S. Ainsi, à partir d'une même source de lumière 20, deux symboles ou caractères de couleurs différentes peuvent être affichés.

Par exemple, la source de lumière 20 est une LED bleue équipée d'une couche de phosphore, par conséquent la plage de longueur couvre au moins le domaine visible. Un premier filtre dichroïque 50 présentant une bande passante autour de 600 nm peut alors permettre de produire un symbole orange. Alors qu'un second filtre dichroïque 55 présentant une bande passante autour de 450 nm peut permettre de produire un symbole bleu. La forme des symboles ou caractères dépend quant à elle des éléments optiques diffractifs.

Le fait d'utiliser une unique source de lumière 20 pour éclairer plusieurs symboles ou caractères représente un gain en termes de cout, d'espace et de simplicité de conception. Le gain d'espace est particulièrement recherché dans les tableaux de bord de véhicule où l'espace est limité.

Dans le dispositif d'affichage 1 présenté dans ce deuxième mode de réalisation, le séparateur divise le faisceau lumineux source S en deux faisceaux lumineux divisés D1, D2. Bien entendu, il est possible de diviser le faisceau lumineux source S en plus que deux faisceaux lumineux divisés de manière à optimiser le rapport source de lumière S sur nombre de caractères ou symboles affichés, qui peuvent être de couleurs différentes.

## Revendications

1. Dispositif d'affichage (1) comprenant :
- une source de lumière (20) conçue pour générer un faisceau lumineux source (S) s'étendant sur une plage de longueurs d'onde prédéterminée ;
- un élément optique diffractif (40) dont la plage de fonctionnement est adaptée à ladite plage de longueurs d'onde et agencé pour recevoir ledit faisceau lumineux source (S) et transmettre un faisceau lumineux image (I) ; et
- un filtre dichroïque (50) placé sur le trajet dudit faisceau lumineux image (I) et dont la bande passante recouvre au moins en partie ladite plage de longueurs d'onde de manière à transmettre au moins en partie ledit faisceau lumineux image (1).

2. Dispositif d'affichage (1) selon la revendication 1, comprenant en outre un diffuseur (60) disposé sur le trajet dudit faisceau lumineux image (I).

3. Dispositif d'affichage (1) selon l'une des revendications 1 à 2, dans lequel ledit élément optique diffractif (40) est mobile par rapport à ladite source de lumière (20).

4. Dispositif d'affichage (1) selon l'une des revendications 1 à 3, dans lequel ledit élément optique diffractif (40) est conçu pour que ledit faisceau lumineux image (I) dépende de la position relative dudit élément optique diffractif (40) par rapport à ladite source de lumière (20).

5. Dispositif d'affichage (1) selon l'une des revendications 1 à 4, comprenant en outre un système optique (30) configuré pour moduler spatialement ledit faisceau lumineux source (S).

6. Dispositif d'affichage (1) selon l'une des revendications 1 à 5, comprenant en outre un guide de lumière.

7. Dispositif d'affichage (1) selon l'une des revendications 1 à 6, dans lequel ladite source de lumière (20) comprend au moins une diode électroluminescente.

8. Dispositif d'affichage (1) selon l'une des revendications 1 à 6, dans lequel ladite source de lumière (20) comprend une source laser.

9. Dispositif d'affichage (1) selon l'une des revendications 1 à 8, dans lequel ledit filtre dichroïque (50) est un filtre du type passe-bande, passe-haut ou passe-bas.

10. Dispositif d'affichage (1) selon l'une des revendications 1 à 9, dans lequel ledit filtre dichroïque (50) est un filtre du type passe-bande et dans lequel ladite bande passante dudit filtre dichroïque est centrée sur ladite plage de longueurs d'onde.

11. Dispositif d'affichage (1) selon l'une des revendications 1 ou 3 à 10 en combinaison avec la revendication 2, dans lequel ledit filtre dichroïque (50) et ledit diffuseur (60) sont collés par un adhésif optique.

12. Dispositif d'affichage (1) selon l'une des revendication 1 à 11 comprenant :
- un séparateur (70) adapté à séparer spatialement ledit faisceau source (S) en au moins deux faisceaux lumineux divisés (D1 ; D2) ;
- un autre élément optique diffractif (45), les plages de fonctionnement de chacun des éléments optiques diffractifs (40 ; 45) étant adaptées à ladite plage de longueurs d'onde et chacun des éléments optiques diffractifs (40 ; 45) étant agencés pour recevoir un desdits faisceaux lumineux divisés (D1 ; D2) et transmettre un faisceau lumineux image (I1 ; I2); et
- un autre filtre dichroïque (55), chacun des deux filtres dichroïques (50 ; 55) étant placé sur le trajet d'un des faisceaux images (I1 ; I2), les bandes passantes de chacun des deux filtres dichroïques (50 ; 55) recouvrant une partie seulement de ladite plage de longueurs d'onde de manière à filtrer, en longueurs d'onde, lesdits faisceaux images (I1 ; I2).

13. Bouton de commande comprenant un dispositif d'affichage (1) selon l'une des revendications 1 à 12.

## Patentansprüche

1. Anzeigevorrichtung (1), umfassend:
- eine Lichtquelle (20), die dazu ausgelegt ist, einen Quellenlichtstrahl (S) zu erzeugen, der sich über einen vorbestimmten Wellenlängenbereich erstreckt;
- ein diffraktives optisches Element (40), dessen Betriebsbereich an den Wellenlängenbereich angepasst ist und das dazu ausgebildet ist, den Quellenlichtstrahl (S) zu empfangen und einen Bildlichtstrahl (I) zu transmittieren; und
- ein dichroitisches Filter (50), das im Strahlengang des Bildlichtstrahls (I) platziert ist und dessen Bandbreite mindestens zum Teil den Wellenlängenbereich überlappt, so dass der Bildlichtstrahl (I) mindestens zum Teil transmittiert wird.

2. Anzeigevorrichtung (1) nach Anspruch 1, umfassend ferner eine Streueinrichtung (60), die im Strahlengang des Bildlichtstrahls (I) angeordnet ist.

3. Anzeigevorrichtung (1) nach einem der Ansprüche 1 bis 2, wobei das diffraktive optische Element (40) in Bezug auf die Lichtquelle (20) beweglich ist.

4. Anzeigevorrichtung (1) nach einem der Ansprüche 1 bis 3, wobei das diffraktive optische Element (40) so ausgelegt ist, dass der Bildlichtstrahl (I) von der relativen Position des diffraktiven optischen Elements (40) in Bezug auf die Lichtquelle (20) abhängt.

5. Anzeigevorrichtung (1) nach einem der Ansprüche 1 bis 4, umfassend ferner ein optisches System (30), das dazu ausgestaltet ist, den Quellenlichtstrahl (S) räumlich zu modulieren.

6. Anzeigevorrichtung (1) nach einem der Ansprüche 1 bis 5, umfassend ferner einen Lichtleiter.

7. Anzeigevorrichtung (1) nach einem der Ansprüche 1 bis 6, wobei die Lichtquelle (20) mindestens eine Leuchtdiode umfasst.

8. Anzeigevorrichtung (1) nach einem der Ansprüche 1 bis 6, wobei die Lichtquelle (20) eine Laserquelle umfasst.

9. Anzeigevorrichtung (1) nach einem der Ansprüche 1 bis 8, wobei das dichroitische Filter (50) ein Bandpass-, Hochpass- oder Tiefpassfilter ist.

10. Anzeigevorrichtung (1) nach einem der Ansprüche 1 bis 9, wobei das dichroitische Filter (50) ein Filter vom Bandpasstyp ist und wobei das Durchlassband des dichroitischen Filters auf den Wellenlängenbereich zentriert ist.

11. Anzeigevorrichtung (1) nch einem der Ansprüche 1 oder 3 bis 10 in Verbindung mit Anspruch 2, wobei das dichroitische Filter (50) und die Streueinrichtung (60) mit einem optischen Klebstoff geklebt sind.

12. Anzeigevorrichtung (1) nach einem der Ansprüche 1 bis 11, umfassend:
- eine Trenneinrichtung (70), die dazu angepasst ist, den Quellenstrahl (S) räumlich in mindestens zwei geteilte Lichtstrahlen (D1; D2) zu trennen;
- ein weiteres diffraktives optisches Element (45), wobei die Betriebsbereiche jedes der diffraktiven optischen Elemente (40; 45) an den Wellenlängenbereich angepasst sind und wobei jedes der diffraktiven optischen Elemente (40; 45) dazu ausgebildet ist, einen der geteilten Lichtstrahlen (D1; D2) zu empfangen und einen Bildlichtstrahl (I1; I2) zu transmittieren; und
- ein weiteres dichroitisches Filter (55), wobei jedes der beiden dichroitischen Filter (50; 55) im Strahlengang eines der Bildstrahlen (I1; I2) platziert ist, wobei die Durchlassbänder jedes der beiden dichroitischen Filter (50; 55) nur einen Teil des Wellenlängenbereichs überlappen, so dass die Bildstrahlen (I1; I2) im Hinblick auf die Wellenlängen gefiltert werden.

13. Bedientaste, umfassend eine Anzeigevorrichtung (1) nach einem der Ansprüche 1 bis 12.

## Claims

1. Display device (1) comprising:
- a light source (20) designed to generate a source light beam (S) extending over a predetermined wavelength range;
- a diffractive optical element (40), the operating range of which is adapted to said wavelength range and which is arranged to receive said source light beam (S) and to transmit an image light beam (I); and
- a dichroic filter (50) placed in the path of said image light beam (I) and the passband of which at least partially covers said wavelength range so as to at least partially transmit said image light beam (I).

2. Display device (1) according to Claim 1, further comprising a diffuser (60) disposed in the path of said image light beam (I).

3. Display device (I) according to any of Claims 1 to 2, wherein said diffractive optical element (40) is movable relative to said light source (20).

4. Display device (1) according to any of Claims 1 to 3, wherein said diffractive optical element (40) is designed so that said image light beam (I) depends on the relative position of said diffractive optical element (40) relative to said light source (20).

5. Display device (1) according to any of Claims 1 to 4, further comprising an optical system (30) configured to spatially modulate said source light beam (S).

6. Display device (1) according to any of Claims 1 to 5, further comprising a light guide.

7. Display device (1) according to any of Claims 1 to 6, wherein said light source (20) comprises at least one light-emitting diode.

8. Display device (1) according to any of Claims 1 to 6, wherein said light source (20) comprises a laser source.

9. Display device (1) according to any of Claims 1 to 8, wherein said dichroic filter (50) is a band-pass, high-pass or low-pass filter.

10. Display device (1) according to any of Claims 1 to 9, wherein said dichroic filter (50) is a band-pass filter and wherein said passband of said dichroic filter is centered on said wavelength range.

11. Display device (1) according to any of Claims 1 or 3 to 10 in combination with Claim 2, wherein said dichroic filter (50) and said diffuser (60) are bonded by an optical adhesive.

12. Display device (1) according to any of Claims 1 to 11, comprising:
- a splitter (70) adapted to spatially split said source beam (S) into at least two split light beams (D1; D2);
- another diffractive optical element (45), the operating ranges of each of the diffractive optical elements (40; 45) being adapted to said wavelength range and each of the diffractive optical elements (40; 45) being arranged to receive one of said split light beams (D1; D2) and to transmit an image light beam (I1; I2); and
- another dichroic filter (55), each of the two dichroic filters (50; 55) being placed in the path of one of the image beams (I1; I2), the passbands of each of the two dichroic filters (50; 55) covering only part of said wavelength range so as to filter said image beams (I1; I2) by wavelengths.

13. Control button comprising a display device (1) according to any of Claims 1 to 12.
